# EUROPEAN PATENT SPECIFICATION

(11) **EP 3 434 925 B1**
(45) Date of publication and mention of the grant of the patent: **04.03.2020**
(21) Application number: 17182725.6
(22) Date of filing: 24.07.2017
(51) Int. Cl.: F16D 65/18, B60T 13/74, F16D 55/226, F16D 65/00, F16D 55/227, F16D 65/095

(54) **BRAKE CALIPER**
BREMSSATTEL
ÉTRIER DE FREIN

(43) Date of publication of application: 30.01.2019
(73) Proprietor: Liao, Chih-Hsien, Taichung City 40755 (TW)
(72) Inventor: Liao, Chih-Hsien, Taichung City 40755 (TW)
(74) Representative: Würmser, Julian

(56) References cited:
- FR-A- 1 280 296
- GB-A- 1 248 745
- US-A1- 2010 000 827
- US-A1- 2014 202 799
- US-A1- 2015 001 010

## Description

The disclosure relates to a caliper, and more particularly to a brake caliper.

A conventional brake caliper disclosed in Taiwanese Patent No. I468400 is used with a brake disk, and includes a main body unit, a lining unit, a braking unit and an actuating unit. The main body unit includes a first side seat, and a second side seat that is connected to the first side seat. The first side seat has a first groove, an axle through hole that extends through an outer side surface of the first side seat and that is in spatial communication with the first groove, and two first guide through holes that are in spatial communication with the first groove. The second side seat has a second groove, and two second guide through holes that are in spatial communication with the second groove and that are respectively aligned with the first guide through holes. The lining unit includes first and second positioning members, and first and second linings that are respectively mounted to the first and second positioning members . The braking unit includes first and second push members that are respectively and movably mounted to the first and second side seats, two rod members that extend through the first and second push members, and two resilient members each of which is sleeved on a respective one of the rod members and has two opposite ends respectively abutting against the first and second push members for resiliently biasing the first and second push members away from each other. The first push member is disposed between the first side seat and the first positioning member, and has an extension tube portion extending through the axle through hole of the first side seat, a threaded hole formed in the extension tube portion, two first guide tube portions respectively extending through the first guide through holes of the first side seat, and two first through holes respectively formed through the first guide tube portions . The second push member is disposed between the second side seat and the second positioning member, and has two second guide tube portions respectively extending through the second guide through holes of the second side seat, and two second through holes respectively formed through the second guide tube portions. The rod members respectively extend through the first guide through holes of the first side seat, the first through holes of the first push member, the second through holes of the second push member and the second guide through holes of the second side seat. Each of the rod members has an abutment end, and a fixing end opposite to the abutment end. The actuating unit is mounted to the fixing ends of the rod members, and includes an actuator, and a threaded actuating axle that engages drivingly the threaded hole of the first push member and that is rotatably driven by the actuator.

When the actuator drives rotation of the actuating axle to move the first push member away from the actuator so as to reduce the distance between the first and second push members, the first and second linings are respectively pushed by the first and second push members to frictionally contact the brake disk for inhibiting rotation of the brake disk.

However, when angular misalignment between the first push member and the first side seat (e.g., misalignment between the extension tube portion of the first push member and the axle through hole of the first side seat) occurs, the first push member and the first side seat may interfere with each other to cause fracture thereof and fracture of the threaded actuating axle.

US 2015/001010 A1 is considered to be the closest prior art and relates to an electric parking caliper. The electric parking caliper is adapted to connect with a brake disk. The brake disk has opposite first and second side surfaces perpendicular to an axis. The electric parking caliper includes first and second brake linings, first and second driving members movable along a central line parallel to the axis, a plurality of driving rods connected between the first and second driving members and parallel to the axis, and an actuating shaft.

Therefore, an object of the present invention is to provide a brake caliper that can alleviate the drawback of the prior art.

According to the present invention, the brake caliper is used with a brake disk. The brake disk has a rotating axis, and opposite first and second end surfaces perpendicular to the rotating axis. The brake caliper includes a main body unit, a lining unit, a braking unit and an actuating unit. The main body unit includes first and second side seats that are located respectively at two sides of the brake disk and adjacent respectively to the first and second end surfaces. The first and second side seats are interconnected and cooperatively define an operating space therebetween that partially receives the brake disk. The lining unit includes a first positioning member that is disposed in the operating space, that is movable in the direction of the rotating axis, and that is disposed between the first side seat and the first end surface of the brake disk, a first lining that is fixedly mounted to the first positioning member and that is disposed between the first positioning member and the first end surface of the brake disk, a second positioning member that is disposed in the operating space, that is movable in the direction of the rotating axis, and that is disposed between the second side seat and the second end surface of the brake disk, and a second lining that is fixedly mounted to the second positioning member and that is disposed between the second positioning member and the second end surface of the brake disk. The braking unit includes a first push arm assembly that is mounted to the first side seat, that is movable in the direction of the rotating axis, and that is located at one side of the first positioning member opposite to the first lining, a second push arm assembly that is mounted to the second side seat, that is movable in the direction of the rotating axis, and that is located at one side of the second positioning member opposite to the second lining, a plurality of spaced-apart rod members that are mounted to the first push arm assembly and the second push arm assembly and that extend in the direction of the rotating axis, and a plurality resilient members for resiliently biasing the first push arm assembly and the second push arm assembly away from each other. Each of the rod members has an abutment end portion for abutment against the second push arm assembly, and a fixing end portion opposite to the abutment end portion in the direction of the rotating axis. The actuating unit includes an actuator that is mounted to the fixing end portions of the rod members, and an axle member that extends along a central axis parallel to the rotating axis and that is driven by the actuator to move at least a portion of the first push arm assembly along the central axis relative to the first side seat, so as to adjust a distance between the first push arm assembly and the second push arm assembly for moving the lining unit. The first push arm assembly includes a self-aligning module that includes at least one self-aligning joint, so that misalignment between the first side seat and a portion of the first push arm assembly without interference between the first push arm assembly and the first side seat is permitted. The first side seat has an axle through hole that extends along the central axis, and a plurality of first guide through holes that extend to be parallel to the central axis. The second side seat has a plurality of second guide through holes that are respectively aligned with the first guide through holes. The first push arm assembly further includes a first main body, an extension tube portion that extends from the first main body and through the axle through hole of said first side seat, a threaded hole that is formed in the extension tube portion, a plurality of first guide tube portions that extend from the first main body and that respectively extend through the first guide through holes of the first side seat, and a plurality of first through holes that are respectively formed through the first guide tube portions. The rod members respectively extend through the first through holes. The self-aligning module of the first push arm assembly includes a first self-aligning bearing that is mounted to the axle through hole of the first side seat and that permits the extension tube portion to slidably extend therethrough. The first self-aligning bearing includes a first outer ring that is mounted to the axle through hole of the first side seat and that has an inner spherical raceway, and a first inner ring that engages slidably the inner spherical raceway and that permits the extension tube portion to slidably extend therethrough, so that misalignment between the extension tube portion and the axle through hole of the first side seat without interference between the extension tube portion and the first side seat is permitted.

According to the present invention, a brake caliper is provided. The brake disk has a rotating axis, and opposite first and second end surfaces perpendicular to the rotating axis. The brake caliper includes a main body unit, a lining unit, a braking unit and an actuating unit. The main body unit includes first and second side seats that are located respectively at two sides of the brake disk and adjacent respectively to the first and second end surfaces. The first and second side seats are interconnected and cooperatively define an operating space therebetween that partially receives the brake disk. The lining unit includes a first positioning member that is disposed in the operating space, that is movable in the direction of the rotating axis, and that is disposed between the first side seat and the first end surface of the brake disk, a first lining that is fixedly mounted to the first positioning member and that is disposed between the first positioning member and the first end surface of the brake disk, a second positioning member that is disposed in the operating space, that is movable in the direction of the rotating axis, and that is disposed between the second side seat and the second end surface of the brake disk, and a second lining that is fixedly mounted to the second positioning member and that is disposed between the second positioning member and the second end surface of the brake disk. The braking unit includes a first push arm assembly that is mounted to the first side seat, that is movable in the direction of the rotating axis, and that is located at one side of the first positioning member opposite to the first lining, a second push arm assembly that is mounted to the second side seat, that is movable in the direction of the rotating axis, and that is located at one side of the second positioning member opposite to the second lining, a plurality of spaced-apart rod members that are mounted to the first push arm assembly and the second push arm assembly and that extend in the direction of the rotating axis, and a plurality resilient members for resiliently biasing the first push arm assembly and the second push arm assembly away from each other. Each of the rod members has an abutment end portion for abutment against the second push arm assembly, and a fixing end portion opposite to the abutment end portion in the direction of the rotating axis. The actuating unit includes an actuator that is mounted to the fixing end portions of the rod members, and an axle member that extends along a central axis parallel to the rotating axis and that is driven by the actuator to move at least a portion of the first push arm assembly along the central axis relative to the first side seat, so as to adjust a distance between the first push arm assembly and the second push arm assembly for moving the lining unit. The first push arm assembly includes a self-aligning module that includes at least one self-aligning joint, so that misalignment between the first side seat and a portion of the first push arm assembly without interference between the first push arm assembly and the first side seat is permitted. The first side seat has an non-circular axle through hole that extends along the central axis, and a plurality of first guide through holes that extend to be parallel to the central axis. The first push arm assembly further includes a first main body, an extension tube portion that extends from the first main body and through the axle through hole of the first side seat, a threaded hole that is formed in the extension tube portion, a plurality of first guide tube portions that extend from the first main body and that respectively extend through the first guide through holes of the first side seat, and a plurality of first through holes that are respectively formed through the first guide tube portions. The extension tube portion has a non-circular cross-section, and engages fittingly and slidably the axle through hole such that the extension tube portion is permitted to move relative to the first side seat along the central axis and is prevented from rotating relative to the first side seat. The self-aligning module of the first push arm assembly includes a self-aligning joint that includes a ball stud that is disposed on one of the first main body and the extension tube portion, and a socket that is disposed on the other one of the first main body and the extension tube portion and that is slidably engaged with the ball stub, so that misalignment between the first main body and the extension tube portion is permitted, and that misalignment between the first main body of the first push arm assembly and the axle through hole of the first side seat without interference between the extension tube portion and the first side seat is permitted.

Other features and advantages of the present invention will become apparent in the following detailed description of the embodiments with reference to the accompanying drawings, of which:
Figure 1 is a perspective view illustrating a first embodiment of the brake caliper according to the present invention used with a brake disk;
Figure 2 is an exploded perspective view illustrating the first embodiment;
Figure 3 is a schematic sectional view illustrating that a braking unit of the first embodiment is not actuated;
Figure 4 is a fragmentary partly sectional view taken along line IV-IV in Figure 3;
Figure 5 is another schematic sectional view illustrating that the braking unit of the first embodiment is actuated; and
Figure 6 is a sectional view illustrating a second embodiment of the brake caliper according to the present invention.

Before the disclosure is described in greater detail, it should be noted that where considered appropriate, reference numerals or terminal portions of reference numerals have been repeated among the figures to indicate corresponding or analogous elements, which may optionally have similar characteristics.

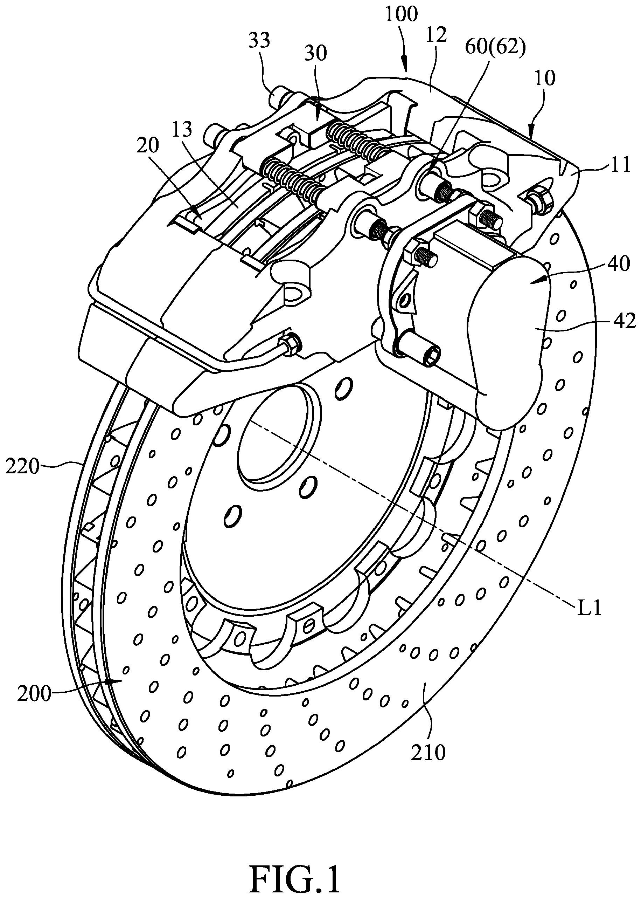

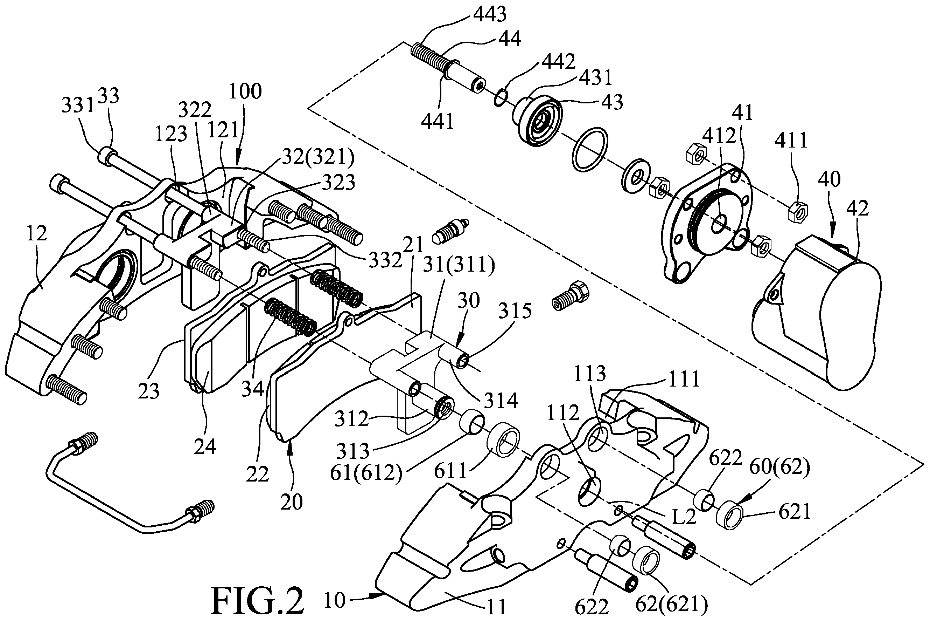

Referring to Figures 1 to 3, a first embodiment of the brake caliper 100 according to this invention is used with a brake disk 200, and cooperates with the brake disk 200 to serve as a parking brake. The brake disk 200 has a rotating axis (L1), and opposite first and second end surfaces 210, 220 perpendicular to the rotating axis (L1). The brake caliper 100 includes a main body unit 10, a lining unit 20, a braking unit 30 and an actuating unit 40.

The main body unit 10 includes first and second side seats 11, 12 located respectively at two sides of the brake disk 200 and adjacent respectively to the first and second end surfaces 210, 220. The first and second side seats 11, 12 are interconnected, and cooperatively define an operating space 13 therebetween that partially receives the brake disk 200.

The first side seat 11 has a first groove 111 that opens toward the first end surface 210 of the brake disk 200 and that partially defines the operating space 13, an axle through hole 112 that is in spatial communication with the first groove 111 and that extends along a central axis (L2) parallel to the rotating axis (L1), and two first guide through holes 113 that are in spatial communication with the first groove 111 and that extend to be parallel to the central axis (L2) and the rotating axis (L1).

The second side seat 12 has a second groove 121 that opens toward the second end surface 220 of the brake disk 200 and that partially defines the operating space 13, and two second guide through holes 123 that are in spatial communication with the second groove 121 and that are respectively aligned with the first guide through holes 113.

The lining unit 20 includes a first positioning member 21 that is disposed in the first groove 111 and that is movable in the direction of the central axis (L2), a first lining 22 that is fixedly mounted to the first positioning member 21, a second positioning member 23 that is disposed in the second groove 121 and that is movable in the direction of the central axis (L2), and a second lining 24 that is fixedly mounted to the second positioning member 23. In this embodiment, the first and second positioning members 21, 23 are respectively located at two opposite sides of the brake disk 200 along the rotating axis (L1). The first lining 22 is located between the first positioning member 21 and the brake disk 200 and is adjacent to the first end surface 210 of the brake disk 200. The second lining 24 is located between the second positioning member 23 and the brake disk 200 and is adjacent to the second end surface 220 of the brake disk 200.

The braking unit 30 includes a first push arm assembly 31 that is mounted to the first side seat 11, that is substantially disposed in the first groove 111 (i.e., the operating space 13), that is movable in the direction of the central axis (L2), and that is located at one side of the first positioning member 21 opposite to the first lining 22, a second push arm assembly 32 that is movably mounted to the second side seat 12, that is substantially disposed in the second groove 121 (i.e., the operating space 13), that is movable in the direction of the central axis (L2), and that is located at one side of the second positioning member 23 opposite to the second lining 24, two spaced-apart rod members 33 that are mounted to the first and second push arm assemblies 31, 32 and that extend in the direction of the central axis (L2), and two resilient members 34 for resiliently biasing the first and second push arm assemblies 31, 32 away from each other. At least one of the first and second push arm assemblies 31, 32 is flexible. In this embodiment, the first push arm assembly 31 is flexible.

The first push arm assembly 31 includes a first main body 311 that is disposed between the first positioning member 21 and the first side seat 11, an extension tube portion 312 that extends from the first main body 311 and through the axle through hole 112 of the first side seat 11, a threaded hole 313 that is formed in the extension tube portion 312, two first guide tube portions 314 that extend from the first main body 311 and that respectively extend through the first guide through holes 113 of the first side seat 11, two first through holes 315 that are respectively formed through the first guide tube portions 314, and a self-aligning module 60.

The self-aligning module 60 of the first push arm assembly 31 includes at least one self-aligning joint. In this embodiment, the self-aligning module 60 includes a first self-aligning bearing 61 that is mounted to the axle through hole 112 of the first side seat 11 and that permit s the extension tube portion 312 to slidably extend therethrough, and two second self-aligning bearings 62 that are respectively mounted to the first guide through holes 113 of the first side seat 11 and that respectively permit the first guide tube portions 314 to slidably extend therethrough (i.e., the self-aligning module 60 includes three self-aligning joints).

The first self-aligning bearing 61 includes a first outer ring 611 that is mounted to the axle through hole 112 of the first side seat 11 and that has an inner spherical raceway, and a first inner ring 612 that slidably engages the inner spherical raceway and that permit s the extension tube portion 312 to slidably extend therethrough, so that misalignment between the extension tube portion 312 and the axle through hole 112 of the first side seat 11 without interference between the extension tube portion 312 and the first side seat 11 is permitted.

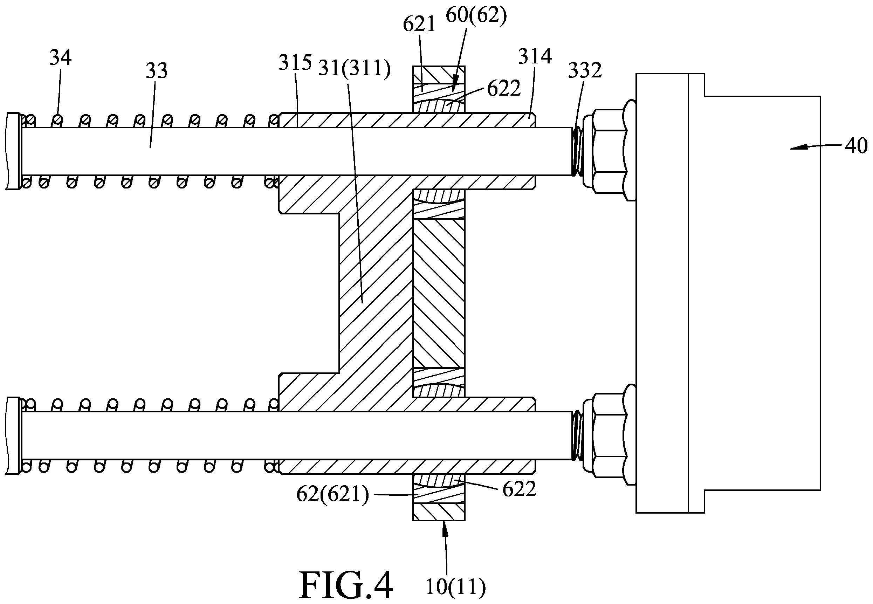

Referring further to Figure 4, each of the second self-aligning bearings 62 includes a second outer ring 621 that is mounted to a respective one of the first guide through holes 113 of the first side seat 11 and that has an inner spherical raceway, and a second inner ring 622 that slidably engages the inner spherical raceway and that permits the corresponding one of the first guide tube portions 314 to slidably extend therethrough, so that misalignment between the corresponding one of the first guide tube portions 314 and the respective one of the first guide through holes 113 of the first side seat 11 without interference between the corresponding one of the first guide tube portions 314 and the first side seat 11 is permitted.

The second push arm assembly 32 includes a second main body 321 that is disposed between the second positioning member 23 and the second side seat 12, two second guide tube portions 322 that extend from the second main body 321 and that respectively and movably extend through the second guide through holes 123 of the second side seat 12, and two second through holes 323 that are respectively formed through the second guide tube portions 322.

The rod members 33 respectively extend through the first guide through holes 113 of the first side seat 11, the first through holes 315 of the first push arm assembly 31, the second through holes 323 of the second push seat assembly 32 and the second guide through holes 123 of the second side seat 12. Each of the rod members 33 has an enlarged abutment end portion 331 for abutment against a distal end of the corresponding one of the second guide tube portions 322, and a fixing end portion 332 opposite to the abutment end portion 331 in the direction of the central axis (L2) . In this embodiment, the abutment end portion 331 of each of the rod members 33 has a diameter greater than that of the corresponding one of the second through holes 323, and the fixing end portion 332 of each of the rod members 33 is threaded, and extends out of the corresponding one of the first through holes 315.

The resilient members 34 are for resiliently biasing the first and second push arm assemblies 31, 32 away from each other. In this embodiment, each of the resilient members 34 is configured as a compression coil spring that is sleeved on a respective one of the rod members 33 and that has two opposite ends respectively abutting against the first and second push arm assemblies 31, 32 for resiliently biasing the first and second push arm assemblies 31, 32 away from each other.

The actuating unit 40 includes a bracket 41 that is mounted to the fixing end portions 332 of the rod members 33 and that is located at one side of the first side seat 11 opposite to the second side seat 12, an actuator 42 that is mounted to one side of the bracket 41 opposite to the first side seat 11, a cap member 43 that is mounted to one side of the bracket 41 opposite to the actuator 42, and an axle member 44 that extends along the central axis (L2) and that is driven by the actuator 42.

The bracket 41 is fixedly mounted to the fixing end portions 332 of the rod members 33 by a plurality of nuts 411, and has a central through hole 412 that extends along the central axis (L2).

The actuator 42 in this embodiment is configured as an assembly of an electric motor and a reduction gear train, and includes an output shaft 421 that extends into the central through hole 412 of the bracket 41 for driving rotation of the axle member 44.

The cap member 43 has a tubular portion 431 that extends along the central axis (L2), and a shoulder surface 432 that is formed in the tubular portion 431 and that faces away from the bracket 41.

The axle member 44 is connected to the output shaft 421 of the actuator 42, extends along the central axis (L2) through the central through hole 412 of the bracket 41 and the cap member 43, and has a flange portion 441 that abuts against the shoulder surface 432 of the cap member 43, a ring member 442 that abuts against one side of the bracket 41 opposite to the cap member 43, and a threaded portion 443 that is located at one side of the flange portion 441 opposite to the ring member 442 and that engages drivingly the threaded hole 313 of the first push arm assembly 31. By virtue of the flange portion 441 and the ring member 442 that respectively abut against the shoulder surface 432 of the cap member 43 and the bracket 41, the axle member 44 is positioned relative to the bracket 41 and the cap member 43, and is prevented from moving relative to the bracket 41 and the cap member 43 along the central axis (L2).

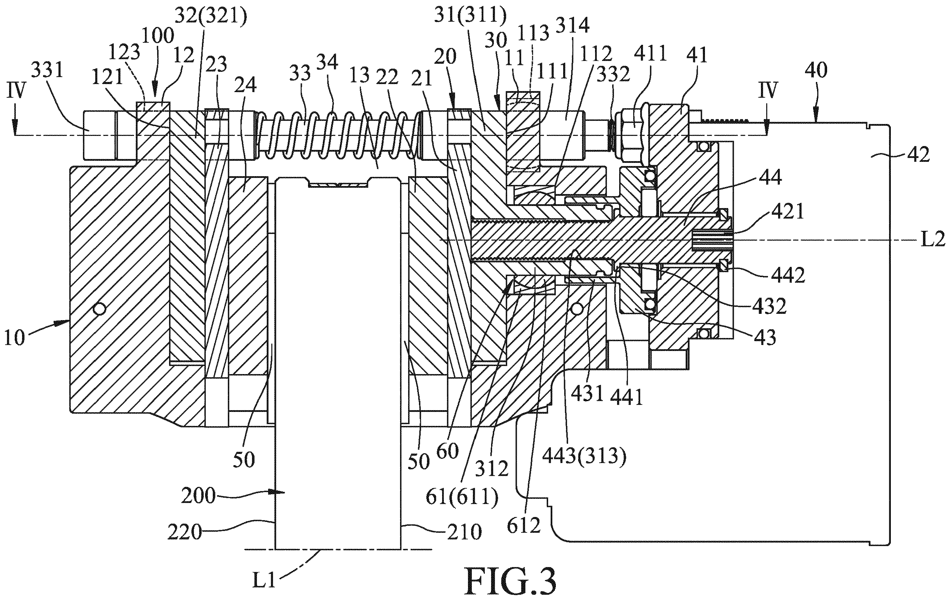

Referring to Figure 3, when the brake caliper 100 is not operated (i.e., in an idle state), the first lining 22 is spaced apart from the first end surface 210 of the brake disk 200, and the second lining 24 is spaced apart from the second end surface 220 of the brake disk 200, so that the brake disk 200 is permitted to rotate freely. At this time, two gaps 50 are respectively formed between the first lining 22 and the first end surface 210 of the brake disk 200 and between the second lining 24 and the second end surface 220 of the brake disk 200, and a distance between the first and second driven members 42, 43 is relatively long.

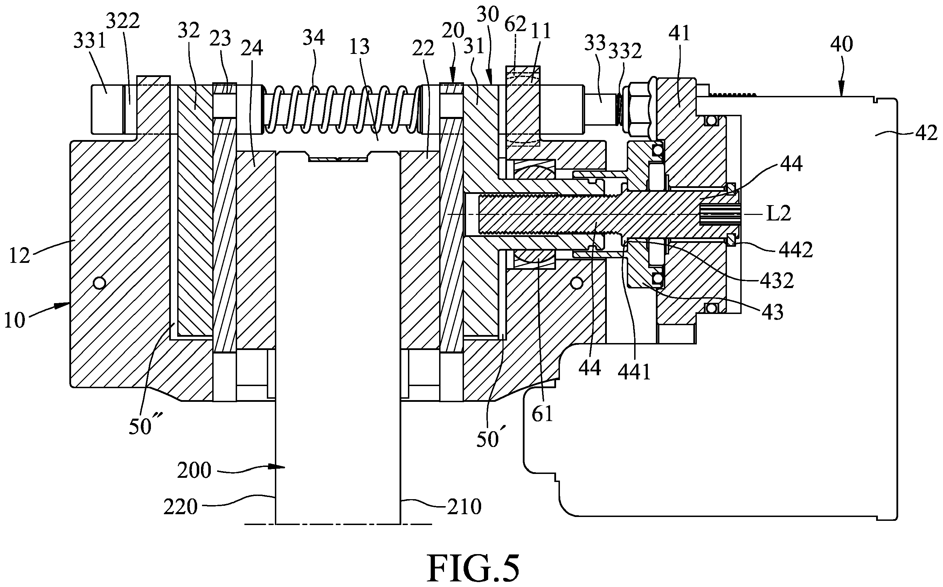

Referring further to Figure 5, when the axle member 44 is rotated by the actuator 42 to move the first main body 311 of the first push arm assembly 31 relative to the rod members 33 and the actuating unit 40 toward the abutment end portions 331 of the rod members 33 via the engagement between the threaded portion 443 and the threaded hole 313 of the first push arm assembly 31 so as to reduce the distance between the first and second push arm assemblies 31, 32, the first main body 311 of the first push arm assembly 31 pushes the first positioning member 21 and the first lining 22 toward the first end surface 210 of the brake disk 200, and the second push arm assembly 32 is urged by the abutment end portions 331 of the rod members 33 to push the second positioning member 23 and the second lining 24 toward the second end surface 220 of the brake disk 200 until the first and second linings 22, 24 are respectively in frictional contact with the first and second end surfaces 210, 220 for inhibiting rotation of the brake disk 200. It should be noted that, compared with the idle state (see Figure 3), when the brake caliper 100 is in a braking state (see Figure 5), an assembly of the rod members 33 and the actuating unit 40 is moved away from the second side seat 12. Also, the gaps 50 between the first lining 22 and the first end surface 210 of the brake disk 200 and between the second lining 24 and the second end surface 220 of the brake disk 200 are vanished, and new gaps 50', 50" are respectively formed between the first push arm assembly 31 and the first side seat 11 and between the second push arm assembly 32 and the second side seat 12. At this time, the resilient members 34 are compressed to generate a restoring force.

When the axle member 44 is rotated by the actuator 42 in an opposite direction to move the first main body 311 of the first push arm assembly 31 relative to the rod members 33 and the actuating unit 40 away from the abutment end portions 331 of the rod members 33, the resilient members 34 resiliently bias the second push arm assembly 32 to abut against the abutment end portions 331 of the rod members 33 so as to increase the distance between the first and second push arm assemblies 31, 32. As such, the first and second linings 22, 24 are permitted to move back to their original position, as shown in Figure 3.

In summary, by virtue of the self-aligning module 60 (i.e., the first self-aligning bearing 61 and the second self-aligning bearings 62), the misalignment between the extension tube portion 312 and the axle through hole 112 of the first side seat 11 without interference between the extension tube portion 312 and the first side seat 11 is permitted, and the misalignment between each of the first guide tube portions 314 and the corresponding one of the first guide through holes 113 of the first side seat 11 without interference between the first guide tube portion 314 and the first side seat 11 is permitted. Therefore, fracture of the first push arm assembly 31, the first side seat 11 and the axle member 44 due to the misalignment between the extension tube portion 312 and the first side seat 11 and between each of the the first guide tube portions 314 and the first side seat 11 is prevented.

Additionally, the brake caliper 100 of this disclosure functions by virtue of an electronically controlled actuator (i.e., the electric motor) for inhibiting rotation of the brake disk 200, and can therefore be easily controlled, especially for hill start. Moreover, the brake caliper 100 has a relatively simple structure, and can be assembled easily.

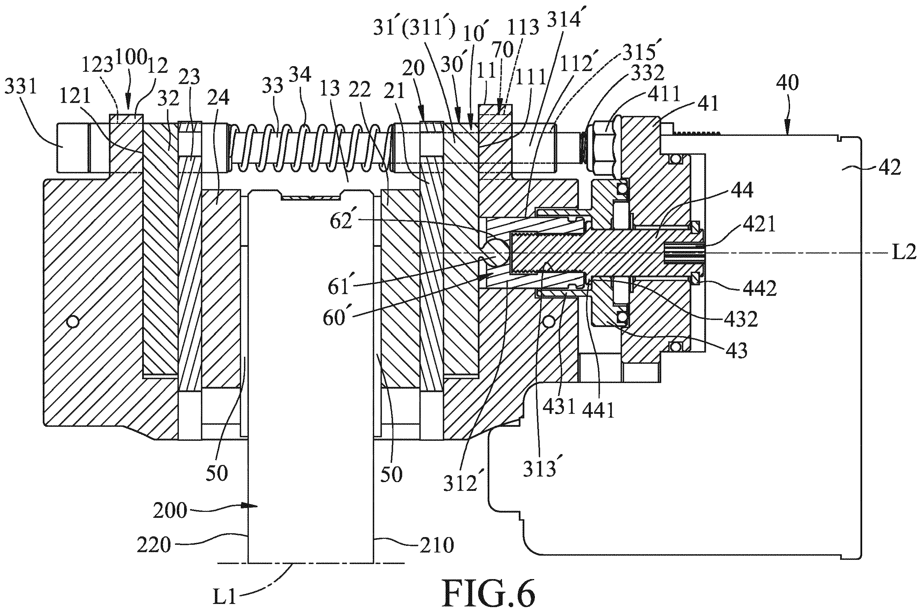

Referring to Figure 6, a second embodiment of the brake caliper 100 according to this invention includes a main body unit 10', a lining unit 20, a braking unit 30', an actuating unit 40, and a pair of self-lubricating bushings 70 (only one is visible in Figure 6) . The differences between the first and second embodiments are as follows.

The axle through hole 112' of the first side seat 11 of the main body unit 10' is configured as a non-circular through hole, such as a hexagonal through hole. The first push arm assembly 31' of the braking unit 30' includes a first main body 311', an extension tube portion 312' that movably extends through the axle through hole 112' of the first side seat 11, a threaded hole 313' that is formed in the extension tube portion 312', two first guide tube portions 314' that extend from the first main body 311' and that respectively and movably extend through the first guide through holes 113 of the first side seat 11, two first through holes 315' that are respectively formed through the first guide tube portions 314', and a self-aligning module 60' . The extension tube portion 312' has a non-circular cross-section such as a hexagonal cross-section, and engages fittingly and slidably the axle through hole 112', such that the extension tube portion 312' is only permitted to move relative to the first side seat 11 along the central axis (L2) and is prevented from rotating relative to the first side seat 11. The self-aligning module 60' includes a self-aligning joint that is configured as a ball joint. The self-aligning joint includes a ball stud 61' that is disposed on the first main body 311', and a socket 62' that is disposed on the extension tube portion 312' and that is slidably engaged with the ball stub 61', so that misalignment between the first main body 311' and the extension tube portion 312' is permitted. The self-lubricating bushings 70 are respectively mounted to the first guide through holes 113 of the first side seat 11, and permit the first guide tube portions 314' to respectively and slidably extend therethrough.

By virtue of the self-aligning module 60' (i.e., the ball joint), the misalignment between the first main body 311' of the first push arm assembly 31' and the axle through hole 112' of the first side seat 11 without interference between the extension tube portion 312' and the first side seat 11 is permitted. Therefore, fracture of the first push arm assembly 31, the first side seat 11 and the axle member 44 due to the misalignment between the first main body 311' and the first side seat 11 can also be prevented.

It should be noted that, in the abovementioned embodiments, the actuator 42 is configured as an assembly of an electric motor and a reduction gear train. However, in a variation, the actuator may be configured as a linear actuator such as an electromagnetic valve or a pressure cylinder.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects.

## Claims

1. A brake caliper (100) adapted to be used with a brake disk (200), the brake disk (200) having a rotating axis (L1), and opposite first and second end surfaces (210, 220) perpendicular to the rotating axis (L1), said brake caliper (100) comprising:
a main body unit (10, 10') including first and second side seats (11, 12) that are adapted to be respectively located at two sides of the brake disk (200) and respectively adjacent to the first and second end surfaces (210, 220), said first and second side seats (11, 12) being interconnected and cooperatively defining an operating space (13) therebetween that is adapted to partially receive the brake disk (200);
a lining unit (20) including a first positioning member (21) that is disposed in said operating space (13), that is movable in the direction of the rotating axis (L1), and that is disposed between said first side seat (11) and the first end surface (210) of the brake disk (200), a first lining (22) that is fixedly mounted to said first positioning member (21) and that is disposed between said first positioning member (21) and the first end surface (210) of the brake disk (200), a second positioning member (23) that is disposed in said operating space (13), that is movable in the direction of the rotating axis (L1), and that is disposed between said second side seat (12) and the second end surface (220) of the brake disk (200), and a second lining (24) that is fixedly mounted to said second positioning member (23) and that is disposed between said second positioning member (23) and the second end surface (220) of the brake disk (200);
a braking unit (30, 30') including a first push arm assembly (31, 31') that is mounted to said first side seat (11), that is movable in the direction of the rotating axis (L1), and that is located at one side of said first positioning member (21) opposite to said first lining (22), a second push arm assembly (32) that is movably mounted to said second side seat (12), that is movable in the direction of the rotating axis (L1), and that is located at one side of said second positioning member (23) opposite to said second lining (24), a plurality of spaced-apart rod members (33) that are mounted to said first push arm assembly (31, 31') and said second push arm assembly (32) and that extend in the direction of the rotating axis (L1), and a plurality of resilient members (34) for resiliently biasing said first push arm assembly (31, 31') and said second push arm assembly (32) away from each other, each of said rod members (33) having an abutment end portion (331) for abutment against said second push arm assembly (32), and a fixing end portion (332) opposite to said abutment end portion (331) in the direction of the rotating axis (L1); and
an actuating unit (40) including an actuator (42) that is mounted to said fixing end portions (332) of said rod members (33), and an axle member (44) that extends along a central axis (L2) parallel to the rotating axis (L1) and that is driven by said actuator (42) to move at least a portion of said first push arm assembly (31, 31') along the central axis (L2) relative to said first side seat (11), so as to adjust a distance between said first push arm assembly (31, 31') and said second push arm assembly (32) for moving said lining unit (20);
wherein said first push arm assembly (31, 31') includes a self-aligning module (60, 60') that includes at least one self-aligning joint, so that misalignment between said first side seat (11) and a portion of said first push arm assembly (31, 31') without interference between said first push arm assembly (31, 31') and said first side seat (11) is permitted;
said brake caliper (100) being **characterized in that** said first side seat (11) has an axle through hole (112) that extends along the central axis (L2), and a plurality of first guide through holes (113) that extend to be parallel to the central axis (L2), said second side seat (12) having a plurality of second guide through holes (123) that are respectively aligned with said first guide through holes (113), said first push arm assembly (31) further including a first main body (311), an extension tube portion (312) that extends from said first main body (311) and through said axle through hole (112) of said first side seat (11), a threaded hole (313) that is formed in said extension tube portion (312), a plurality of first guide tube portions (314) that extend from said first main body (311) and that respectively extend through said first guide through holes (113) of said first side seat (11), and a plurality of first through holes (315) that are respectively formed through said first guide tube portions (314), said rod members (33) respectively extending through said first through holes (315), said self-aligning module (60) of said first push arm assembly (31) including a first self-aligning bearing (61) that is mounted to said axle through hole (112) of said first side seat (11) and that permits said extension tube portion (312) to slidably extend therethrough, said first self-aligning bearing (61) including a first outer ring (611) that is mounted to said axle through hole (112) of said first side seat (11) and that has an inner spherical raceway, and a first inner ring (612) that engages slidably said inner spherical raceway and that permits said extension tube portion (312) to slidably extend therethrough, so that misalignment between said extension tube portion (312) and said axle through hole (112) of said first side seat (11) without interference between said extension tube portion (312) and said first side seat (11) is permitted.

2. The brake caliper (100) as claimed in claim 1, further **characterized in that** said self-aligning module (60) of said first push arm assembly (31) further includes a plurality of second self-aligning bearings (62) that are respectively mounted to said first guide through holes (113) of said first side seat (11) and that respectively permit said first guide tube portions (314) to slidably extend therethrough, each of said second self-aligning bearings (62) including a second outer ring (621) that is mounted to a respective one of said first guide through holes (113) of said first side seat (11) and that has an inner spherical raceway, and a second inner ring (622) that engages slidably said inner spherical raceway and that permits the corresponding one of said first guide tube portions (314) to slidably extend therethrough, so that misalignment between the corresponding one of said first guide tube portions (314) and the respective one of said first guide through holes (113) of said first side seat (11) without interference between the corresponding one of said first guide tube portions (314) and said first side seat (11) is permitted.

3. A brake caliper (100) adapted to be used with a brake disk (200), the brake disk (200) having a rotating axis (L1), and opposite first and second end surfaces (210, 220) perpendicular to the rotating axis (L1), said brake caliper (100) comprising:
a main body unit (10, 10') including first and second side seats (11, 12) that are adapted to be respectively located at two sides of the brake disk (200) and respectively adjacent to the first and second end surfaces (210, 220), said first and second side seats (11, 12) being interconnected and cooperatively defining an operating space (13) therebetween that is adapted to partially receive the brake disk (200);
a lining unit (20) including a first positioning member (21) that is disposed in said operating space (13), that is movable in the direction of the rotating axis (L1), and that is disposed between said first side seat (11) and the first end surface (210) of the brake disk (200), a first lining (22) that is fixedly mounted to said first positioning member (21) and that is disposed between said first positioning member (21) and the first end surface (210) of the brake disk (200), a second positioning member (23) that is disposed in said operating space (13), that is movable in the direction of the rotating axis (L1), and that is disposed between said second side seat (12) and the second end surface (220) of the brake disk (200), and a second lining (24) that is fixedly mounted to said second positioning member (23) and that is disposed between said second positioning member (23) and the second end surface (220) of the brake disk (200);
a braking unit (30, 30') including a first push arm assembly (31, 31') that is mounted to said first side seat (11), that is movable in the direction of the rotating axis (L1), and that is located at one side of said first positioning member (21) opposite to said first lining (22), a second push arm assembly (32) that is movably mounted to said second side seat (12), that is movable in the direction of the rotating axis (L1), and that is located at one side of said second positioning member (23) opposite to said second lining (24), a plurality of spaced-apart rod members (33) that are mounted to said first push arm assembly (31, 31') and said second push arm assembly (32) and that extend in the direction of the rotating axis (L1), and a plurality of resilient members (34) for resiliently biasing said first push arm assembly (31, 31') and said second push arm assembly (32) away from each other, each of said rod members (33) having an abutment end portion (331) for abutment against said second push arm assembly (32), and a fixing end portion (332) opposite to said abutment end portion (331) in the direction of the rotating axis (L1); and
an actuating unit (40) including an actuator (42) that is mounted to said fixing end portions (332) of said rod members (33), and an axle member (44) that extends along a central axis (L2) parallel to the rotating axis (L1) and that is driven by said actuator (42) to move at least a portion of said first push arm assembly (31, 31') along the central axis (L2) relative to said first side seat (11), so as to adjust a distance between said first push arm assembly (31, 31') and said second push arm assembly (32) for moving said lining unit (20);
wherein said first push arm assembly (31, 31') includes a self-aligning module (60, 60') that includes at least one self-aligning joint, so that misalignment between said first side seat (11) and a portion of said first push arm assembly (31, 31') without interference between said first push arm assembly (31, 31') and said first side seat (11) is permitted;
said brake caliper (100) being **characterized in that** said first side seat (11) has an non-circular axle through hole (112') that extends along the central axis (L2), and a plurality of first guide through holes (113) that extend to be parallel to the central axis (L2), said first push arm assembly (31') further including a first main body (311'), an extension tube portion (312') that extends from said first main body (311') and through said axle through hole (112') of said first side seat (11), a threaded hole (313') that is formed in said extension tube portion (312'), a plurality of first guide tube portions (314') that extend from said first main body (311') and that respectively extend through said first guide through holes (113') of said first side seat (11), and a plurality of first through holes (315') that are respectively formed through said first guide tube portions (314'), said extension tube portion (312') having a non-circular cross-section, and engaging fittingly and slidably said axle through hole (112') such that said extension tube portion (312') is permitted to move relative to said first side seat (11) along the central axis (L2) and is prevented from rotating relative to said first side seat (11), said self-aligning module (60') of said first push arm assembly (31') including a self-aligning joint that includes a ball stud (61') that is disposed on one of said first main body (311') and said extension tube portion (312'), and a socket (62') that is disposed on the other one of said first main body (311') and said extension tube portion (312') and that is slidably engaged with said ball stub (61'), so that misalignment between said first main body (311') and said extension tube portion (312') is permitted, and that misalignment between said first main body (311') of said first push arm assembly (31') and said axle through hole (112') of said first side seat (11) without interference between said extension tube portion (312') and said first side seat (11) is permitted.

4. The brake caliper (100) as claimed in claim 3, further **characterized in that** said ball stud (61') is disposed on said first main body (311'), and said socket (62') is disposed on said extension tube portion (312').

5. The brake caliper (100) as claimed in claim 4, further **characterized by** a plurality of self-lubricating bushings (70) that are respectively mounted to said first guide through holes (113) of said first side seat (11) and that permit said first guide tube portions (314') to respectively and slidably extend therethrough.

## Patentansprüche

1. Bremssattel (100), der dazu angepasst ist, mit einer Bremsscheibe (200) verwendet zu werden, wobei die Bremsscheibe (200) eine Drehachse (L1) und eine entgegengesetzte erste und zweite Endfläche (210, 220) senkrecht zur Drehachse (L1) hat, wobei der Bremssattel (100) umfasst:
eine Hauptkörpereinheit (10, 10') mit einem ersten und zweiten Seitensitz (11, 12), die dazu angepasst sind, sich jeweils auf zwei Seiten der Bremsscheibe (200) und jeweils angrenzend an die erste und zweite Endfläche (210, 220) zu befinden, wobei der erste und zweite Seitensitz (11, 12) miteinander verbunden sind und zusammenwirkend zwischen sich einen Betriebsraum (13) definieren, der dazu angepasst ist, die Bremsscheibe (200) teilweise aufzunehmen;
eine Belageinheit (20) mit einem ersten Positionierungsteil (21), das in dem Betriebsraum (13) angeordnet, in der Richtung der Drehachse (L1) beweglich und zwischen dem ersten Seitensitz (11) und der ersten Endfläche (210) der Bremsscheibe (200) angeordnet ist, einem ersten Belag (22), der fest am ersten Positionierungsteil (21) angebracht und zwischen dem ersten Positionierungsteil (21) und der ersten Endfläche (210) der Bremsscheibe (200) angeordnet ist, einem zweiten Positionierungsteil (23), das in dem Betriebsraum (13) angeordnet, in der Richtung der Drehachse (L1) beweglich und zwischen dem zweiten Seitensitz (12) und der zweiten Endfläche (220) der Bremsscheibe (200) angeordnet ist, und einem zweiten Belag (24), der fest am zweiten Positionierungsteil (23) angebracht und zwischen dem zweiten Positionierungsteil (23) und der zweiten Endfläche (220) der Bremsscheibe (200) angeordnet ist;
eine Bremseinheit (30, 30') mit einer ersten Drückarmanordnung (31, 31'), die am ersten Seitensitz (11) angebracht, in der Richtung der Drehachse (L1) beweglich ist und sich auf einer Seite des ersten Positionierungsteils (21) dem ersten Belag (22) entgegengesetzt befindet, einer zweiten Drückarmanordnung (32), die beweglich am zweiten Seitensitz (12) angebracht, in der Richtung der Drehachse (L1) beweglich ist und sich auf einer Seite des zweiten Positionierungsteils (23) dem zweiten Belag (24) entgegengesetzt befindet, mehreren voneinander beabstandeten Stangenteilen (33), die an der ersten Drückarmanordnung (31, 31') und der zweiten Drückarmanordnung (32) angebracht sind und sich in der Richtung der Drehachse (L1) erstrecken, und mehreren federelastischen Teilen (34), um die erste Drückarmanordnung (31, 31') und die zweite Drückarmanordnung (32) federelastisch voneinander weg zu spannen, wobei jedes der Stangenteile (33) einen Anlageendabschnitt (331) zur Anlage an der zweiten Drückarmanordnung (32) und einen Fixierungsendabschnitt (332) hat, der in der Richtung der Drehachse (L1) dem Anlageendabschnitt (331) entgegengesetzt ist; und
eine Betätigungseinheit (40) mit einem Stellglied (42), das an den Fixierungsendabschnitten (332) der Stangenteile (33) angebracht ist, und einem Achsenteil (44), das sich entlang einer Mittelachse (L2) parallel zur Drehachse (L1) erstreckt und durch das Stellglied (42) angetrieben wird, um zumindest einen Abschnitt der ersten Drückarmanordnung (31, 31') entlang der Mittelachse (L2) in Bezug auf den ersten Seitensitz (11) zu bewegen, um einen Abstand zwischen der ersten Drückarmanordnung (31, 31') und der zweiten Drückarmanordnung (32) zum Bewegen der Belageinheit (20) einzustellen;
wobei die erste Drückarmanordnung (31, 31') ein Selbstausrichtungsmodul (60, 60') aufweist, das mindestens eine Selbstausrichtungsverbindung aufweist, so dass eine Fehlausrichtung zwischen dem ersten Seitensitz (11) und einem Abschnitt der ersten Drückarmanordnung (31, 31') ohne Störung zwischen der ersten Drückarmanordnung (31, 31') und dem ersten Seitensitz (11) zugelassen wird;
wobei der Bremssattel (100) **dadurch gekennzeichnet ist, dass** der erste Seitensitz (11) eine Achsendurchgangsöffnung (112), die sich entlang der Mittelachse (L2) erstreckt, und mehrere erste Führungsdurchgangsöffnungen (113) hat, die sich parallel zur Mittelachse (L2) erstrecken, wobei der zweite Seitensitz (12) mehrere zweite Führungsdurchgangsöffnungen (123) hat, die jeweils mit den ersten Führungsdurchgangsöffnungen (113) ausgerichtet sind, wobei die erste Drückarmanordnung (31) darüber hinaus einen ersten Hauptkörper (311), einen Verlängerungsrohrabschnitt (312), der sich vom ersten Hauptkörper (311) und durch die Achsendurchgangsöffnung (112) des ersten Seitensitzes (11) erstreckt, eine Gewindebohrung (313), die in dem Verlängerungsrohrabschnitt (312) ausgebildet ist, mehrere erste Führungsrohrabschnitte (314), die sich vom ersten Hauptkörper (311) erstrecken und sich jeweils durch die ersten Führungsdurchgangsöffnungen (113) des ersten Seitensitzes (11) erstrecken, und mehrere erste Durchgangsöffnungen (315) aufweist, die jeweils durch die ersten Führungsrohrabschnitte (314) hindurch ausgebildet sind, wobei sich die Stangenteile (33) jeweils durch die ersten Durchgangsöffnungen (315) hindurch erstrecken, das Selbstausrichtungsmodul (60) der ersten Drückarmanordnung (31) ein erstes Selbstausrichtungslager (61) aufweist, das an der Achsendurchgangsöffnung (112) des ersten Seitensitzes (11) angebracht ist und den Verlängerungsrohrabschnitt (312) sich gleitbeweglich durch diese hindurch erstrecken lässt, wobei das erste Selbstausrichtungslager (61) einen ersten Außenring (611), der an der Achsendurchgangsöffnung (112) des ersten Seitensitzes (11) angebracht ist und eine innere, kugelförmige Lauffläche hat, und einen ersten Innenring (612) aufweist, der gleitbeweglich an der inneren kugelförmigen Lauffläche angreift und den Verlängerungsrohrabschnitt (312) sich gleitbeweglich durch diesen hindurch erstrecken lässt, so dass eine Fehlausrichtung zwischen dem Verlängerungsrohrabschnitt (312) und der Achsendurchgangsöffnung (112) des ersten Seitensitzes (11) ohne Störung zwischen dem Verlängerungsrohrabschnitt (312) und dem ersten Seitensitz (11) zugelassen wird.

2. Bremssattel (100) nach Anspruch 1, darüber hinaus **dadurch gekennzeichnet, dass** das Selbstausrichtungsmodul (60) der ersten Drückarmanordnung (31) darüber hinaus mehrere zweite Selbstausrichtungslager (62) aufweist, die jeweils an den ersten Führungsdurchgangsöffnungen (113) des ersten Seitensitzes (11) angebracht sind und jeweils die ersten Führungsrohrabschnitte (314) sich gleitbeweglich durch diese hindurch erstrecken lassen, wobei jedes der zweiten Selbstausrichtungslager (62) einen zweiten Außenring (621), der an einem jeweiligen der ersten Führungsdurchgangsöffnungen (113) des ersten Seitensitzes (11) angebracht ist und eine innere kugelförmige Lauffläche hat, und einen zweiten Innenring (622) aufweist, der gleitbeweglich an der inneren kugelförmigen Lauffläche angreift und den entsprechenden der ersten Führungsrohrabschnitte (314) gleitbeweglich sich durch diesen hindurch erstrecken lässt, so dass eine Fehlausrichtung zwischen dem entsprechenden der ersten Führungsrohrabschnitte (314) und der jeweiligen der ersten Führungsdurchgangsöffnungen (113) des ersten Seitensitzes (11) ohne Störung zwischen dem entsprechenden der ersten Führungsrohrabschnitte (314) und dem ersten Seitensitz (11) zugelassen wird.

3. Bremssattel (100), der dazu angepasst ist, mit einer Bremsscheibe (200) verwendet zu werden, wobei die Bremsscheibe (200) eine Drehachse (L1) und eine entgegengesetzte erste und zweite Endfläche (210, 220) senkrecht zur Drehachse (L1) hat, wobei der Bremssattel (100) umfasst:
eine Hauptkörpereinheit (10, 10') mit einem ersten und zweiten Seitensitz (11, 12), die dazu angepasst sind, sich jeweils auf zwei Seiten der Bremsscheibe (200) und jeweils angrenzend an die erste und zweite Endfläche (210, 220) zu befinden, wobei der erste und zweite Seitensitz (11, 12) miteinander verbunden sind und zusammenwirkend zwischen sich einen Betriebsraum (13) definieren, der dazu angepasst ist, die Bremsscheibe (200) teilweise aufzunehmen;
eine Belageinheit (20) mit einem ersten Positionierungsteil (21), das in dem Betriebsraum (13) angeordnet, in der Richtung der Drehachse (L1) beweglich und zwischen dem ersten Seitensitz (11) und der ersten Endfläche (210) der Bremsscheibe (200) angeordnet ist, einem ersten Belag (22), der fest am ersten Positionierungsteil (21) angebracht und zwischen dem ersten Positionierungsteil (21) und der ersten Endfläche (210) der Bremsscheibe (200) angeordnet ist, einem zweiten Positionierungsteil (23), das in dem Betriebsraum (13) angeordnet, in der Richtung der Drehachse (L1) beweglich und zwischen dem zweiten Seitensitz (12) und der zweiten Endfläche (220) der Bremsscheibe (200) angeordnet ist, und einem zweiten Belag (24), der fest am zweiten Positionierungsteil (23) angebracht und zwischen dem zweiten Positionierungsteil (23) und der zweiten Endfläche (220) der Bremsscheibe (200) angeordnet ist;
eine Bremseinheit (30, 30') mit einer ersten Drückarmanordnung (31, 31'), die am ersten Seitensitz (11) angebracht, in der Richtung der Drehachse (L1) beweglich ist und sich auf einer Seite des ersten Positionierungsteils (21) dem ersten Belag (22) entgegengesetzt befindet, einer zweiten Drückarmanordnung (32), die beweglich am zweiten Seitensitz (12) angebracht, in der Richtung der Drehachse (L1) beweglich ist und sich auf einer Seite des zweiten Positionierungsteils (23) dem zweiten Belag (24) entgegengesetzt befindet, mehreren voneinander beabstandeten Stangenteilen (33), die an der ersten Drückarmanordnung (31, 31') und der zweiten Drückarmanordnung (32) angebracht sind und sich in der Richtung der Drehachse (L1) erstrecken, und mehreren federelastischen Teilen (34), um die erste Drückarmanordnung (31, 31') und die zweite Drückarmanordnung (32) federelastisch voneinander weg zu spannen, wobei jedes der Stangenteile (33) einen Anlageendabschnitt (331) zur Anlage an der zweiten Drückarmanordnung (32) und einen Fixierungsendabschnitt (332) hat, der in der Richtung der Drehachse (L1) dem Anlageendabschnitt (331) entgegengesetzt ist; und
eine Betätigungseinheit (40) mit einem Stellglied (42), das an den Fixierungsendabschnitten (332) der Stangenteile (33) angebracht ist, und einem Achsenteil (44), das sich entlang einer Mittelachse (L2) parallel zur Drehachse (L1) erstreckt und durch das Stellglied (42) angetrieben wird, um zumindest einen Abschnitt der ersten Drückarmanordnung (31, 31') entlang der Mittelachse (L2) in Bezug auf den ersten Seitensitz (11) zu bewegen, um einen Abstand zwischen der ersten Drückarmanordnung (31, 31') und der zweiten Drückarmanordnung (32) zum Bewegen der Belageinheit (20) einzustellen;
wobei die erste Drückarmanordnung (31, 31') ein Selbstausrichtungsmodul (60, 60') aufweist, das mindestens eine Selbstausrichtungsverbindung aufweist, so dass eine Fehlausrichtung zwischen dem ersten Seitensitz (11) und einem Abschnitt der ersten Drückarmanordnung (31, 31') ohne Störung zwischen der ersten Drückarmanordnung (31, 31') und dem ersten Seitensitz (11) zugelassen wird;
wobei der Bremssattel (100) **dadurch gekennzeichnet ist, dass** der erste Seitensitz (11) eine nicht kreisförmige Achsendurchgangsöffnung (112'), die sich entlang der Mittelachse (L2) erstreckt, und mehrere erste Führungsdurchgangsöffnungen (113) hat, die sich parallel zur Mittelachse (L2) erstrecken, wobei die erste Drückarmanordnung (31') darüber hinaus einen ersten Hauptkörper (311'), einen Verlängerungsrohrabschnitt (312'), der sich vom ersten Hauptkörper (311') und durch die Achsendurchgangsöffnung (112') des ersten Seitensitzes (11) erstreckt, eine Gewindebohrung (313'), die in dem Verlängerungsrohrabschnitt (312') ausgebildet ist, mehrere erste Führungsrohrabschnitte (314'), die sich vom ersten Hauptkörper (311') erstrecken und sich jeweils durch die ersten Führungsdurchgangsöffnungen (113') des ersten Seitensitzes (11) erstrecken, und mehrere erste Durchgangsöffnungen (315') aufweist, die jeweils durch die ersten Führungsrohrabschnitte (314') hindurch ausgebildet sind, wobei der Verlängerungsrohrabschnitt (312') einen nicht kreisförmigen Querschnitt hat und sich anpassend und gleitbeweglich an der Achsendurchgangsöffnung (112') angreift, so dass der Verlängerungsrohrabschnitt (312') in Bezug auf den ersten Seitensitz (11) sich entlang der Mittelachse (L2) bewegen darf und daran gehindert wird, sich in Bezug auf den ersten Seitensitz (11) zu drehen, wobei das Selbstausrichtungsmodul (60') der ersten Drückarmanordnung (31') eine Selbstausrichtungsverbindung aufweist, die einen Kugelbolzen (61'), der am ersten Hauptkörper (311') oder am Verlängerungsrohrabschnitt (312') angeordnet ist, und eine Fassung (62') aufweist, die an jeweils dem anderen Teil, also am ersten Hauptkörper (311') oder Verlängerungsrohrabschnitt (312') angeordnet und gleitbeweglich mit dem Kugelbolzen (61') in Eingriff ist, so dass eine Fehlausrichtung zwischen dem ersten Hauptkörper (311') und dem Verlängerungsrohrabschnitt (312') zugelassen wird, und dass eine Fehlausrichtung zwischen dem ersten Hauptkörper (311') der ersten Drückarmanordnung (31') und der Achsendurchgangsöffnung (112') des ersten Seitensitzes (11) ohne Störung zwischen dem Verlängerungsrohrabschnitt (312') und dem ersten Seitensitz (11) zugelassen wird.

4. Bremssattel (100) nach Anspruch 3, darüber hinaus **dadurch gekennzeichnet, dass** der Kugelbolzen (61') am ersten Hauptkörper (311') angeordnet und die Fassung (62') am Verlängerungsrohrabschnitt (312') angeordnet ist.

5. Bremssattel (100) nach Anspruch 4, darüber hinaus durch mehrere selbstschmierende Buchsen (70) gekennzeichnet, die jeweils an den ersten Führungsdurchgangsöffnungen (113) des ersten Seitensitzes (11) angebracht sind und die ersten Führungsrohrabschnitte (314') sich jeweils gleitbeweglich durch diese hindurch erstrecken lassen.

## Revendications

1. Étrier de frein (100) apte à être utilisé avec un disque de frein (200), le disque de frein (200) ayant un axe de rotation (L1), et des première et deuxième surfaces d'extrémité (210, 220) opposées perpendiculaires à l'axe de rotation (L1), ledit étrier de frein (100) comprenant :
une unité de corps principal (10, 10') incluant des premier et deuxième sièges latéraux (11, 12) qui sont aptes à être respectivement situés de deux côtés du disque de frein (200) et de manière respectivement adjacente aux première et deuxième surfaces d'extrémité (210, 220), lesdits premier et deuxième sièges latéraux (11, 12) étant interconnectés et définissant conjointement entre eux un espace de fonctionnement (13) qui est apte à recevoir en partie le disque de frein (200) ;
une unité de garnissage (20) incluant un premier organe de positionnement (21) qui est disposé dans ledit espace de positionnement (13), qui est mobile dans la direction de l'axe de rotation (L1), et qui est disposé entre ledit premier siège latéral (11) et la première surface d'extrémité (210) du disque de frein (200), un premier garnissage (22) qui est monté de manière fixe sur ledit premier organe de positionnement (21) et qui est disposé entre ledit premier organe de positionnement (21) et la première surface d'extrémité (210) du disque de frein (200), un deuxième organe de positionnement (23) qui est disposé dans ledit espace de fonctionnement (13), qui est mobile dans la direction de l'axe de rotation (L1), et qui est disposé entre ledit deuxième siège latéral (12) et la deuxième surface d'extrémité (220) du disque de frein (200), et un deuxième garnissage (24) qui est monté de manière fixe sur ledit deuxième organe de positionnement (23) et qui est disposé entre ledit deuxième organe de positionnement (23) et la deuxième surface d'extrémité (220) du disque de frein (200) ;
une unité de freinage (30, 30') incluant un premier ensemble de bras de poussée (31, 31') qui est monté sur ledit premier siège latéral (11), qui est mobile dans la direction de l'axe de rotation (L1), et qui est située d'un côté dudit premier organe de positionnement (21) à l'opposé dudit premier garnissage (22), un deuxième ensemble de bras de poussée (32) qui est monté de manière mobile sur ledit deuxième siège latéral (12), qui est mobile dans la direction de l'axe de rotation (L1), et qui est situé d'un côté dudit deuxième organe de positionnement (23) à l'opposé dudit deuxième garnissage (24), une pluralité d'organes en tige (33) espacés qui sont montés sur ledit premier ensemble de bras de poussée (31, 31') et ledit deuxième ensemble de bras de poussée (32) et qui s'étendent dans la direction de l'axe de rotation (L1), et une pluralité d'organes souples (34) pour pousser de manière souple ledit premier ensemble de bras de poussée (31, 31') et ledit deuxième ensemble de bras de poussée (32) en éloignement l'un de l'autre, chacun desdits organes en tige (33) présentant une partie d'extrémité de butée (331) pour se mettre en butée contre ledit deuxième ensemble de bras de poussée (32), et une partie d'extrémité de fixation (332) opposée à ladite partie d'extrémité de butée (331) dans la direction de l'axe de rotation (L1) ; et
une unité d'actionnement (40) incluant un actionneur (42) qui est monté sur lesdites parties d'extrémité de fixation (332) desdits organes en tige (33), et un organe en essieu (44) qui s'étend le long d'un axe central (L2) parallèle à l'axe de rotation (L1) et qui est entraîné par ledit actionneur (42) pour déplacer au moins une partie dudit premier ensemble de bras de poussée (31, 31') le long de l'axe central (L2) par rapport audit premier siège latéral (11), de manière à régler une distance entre ledit premier ensemble de bras de poussée (31, 31') et ledit deuxième ensemble de bras de poussée (32) afin de déplacer ladite unité de garnissage (20) ;
sachant que ledit premier ensemble de bras de poussée (31, 31') inclut un module d'auto-alignement (60, 60') qui inclut au moins une articulation d'auto-alignement, de telle sorte qu'un désalignement entre ledit premier siège latéral (11) et une partie dudit premier ensemble de bras de poussée (31, 31') sans interférence entre ledit premier ensemble de bras de poussée (31, 31') et ledit premier siège latéral (11) soit permis ;
ledit étrier de frein (100) étant **caractérisé en ce que** ledit premier siège latéral (11) présente un trou traversant d'essieu (112) qui s'étend le long de l'axe central (L2), et une pluralité de premiers trous traversants de guidage (113) qui s'étendent pour être parallèles à l'axe central (L2), ledit deuxième siège latéral (12) présentant une pluralité de deuxièmes trous traversants de guidage (123) qui sont respectivement alignés avec lesdits premiers trous traversants de guidage (113), ledit premier ensemble de bras de poussée (31) incluant en outre un premier corps principal (311), une partie en tube d'extension (312) qui s'étend depuis ledit premier corps principal (311) et à travers ledit trou traversant d'essieu (112) dudit premier siège latéral (11), un trou fileté (313) qui est formé dans ladite partie en tube d'extension (312), une pluralité de premières parties en tube de guidage (314) qui s'étendent depuis ledit premier corps principal (311) et qui s'étendent respectivement à travers lesdits premiers trous traversants de guidage (113) dudit premier siège latéral (11), et une pluralité de premiers trous traversants (315) qui sont respectivement formés à travers lesdites premières parties en tube de guidage (314), lesdits organes en tige (33) s'étendant respectivement à travers lesdits premiers trous traversants (315), ledit module d'auto-alignement (60) dudit premier ensemble de bras de poussée (31) incluant un premier palier d'auto-alignement (61) qui est monté sur ledit trou traversant d'essieu (112) dudit premier siège latéral (11) et qui permet à ladite partie en tube d'extension (312) de s'étendre de manière coulissante à travers lui, ledit premier palier d'auto-alignement (61) incluant une première bague extérieure (611) qui est montée sur ledit trou traversant d'essieu (112) dudit premier siège latéral (11) et qui présente une piste sphérique intérieure, et une première bague intérieure (612) qui met en prise de manière coulissante ladite piste sphérique intérieure et qui permet à ladite partie en tube d'extension (312) de s'étendre de manière coulissante à travers elle, de telle sorte qu'un désalignement entre ladite partie en tube d'extension (312) et ledit trou traversant d'essieu (112) dudit premier siège latéral (11) sans interférence entre ladite partie en tube d'extension (312) et ledit premier siège latéral (11) soit permis.

2. L'étrier de frein (100) tel que revendiqué dans la revendication 1, **caractérisé en outre en ce que** ledit module d'auto-alignement (60) dudit premier ensemble de bras de poussée (31) inclut en outre une pluralité de deuxièmes paliers d'auto-alignement (62) qui sont respectivement montés sur lesdits premiers trous traversants de guidage (113) dudit premier siège latéral (11) et qui permettent respectivement auxdites premières parties en tube de guidage (314) de s'étendre de manière coulissante à travers eux, chacun desdits deuxièmes paliers d'auto-alignement (62) incluant une deuxième bague extérieure (621) qui est montée sur un trou traversant de guidage respectif parmi lesdits premiers trous traversants de guidage (113) dudit premier siège latéral (11) et qui présente une piste sphérique intérieure, et une deuxième bague intérieure (622) qui met en prise de manière coulissante ladite piste sphérique intérieure et qui permet à la partie en tube de guidage correspondante parmi lesdites premières parties en tube de guidage (314) de s'étendre de manière coulissante à travers elle, de telle sorte qu'un désalignement entre l'une correspondante desdites premières parties en tube de guidage (314) et l'un respectif desdits premiers trous traversants de guidage (113) dudit premier siège latéral (11) sans interférence entre l'une correspondante desdites premières parties en tube de guidage (314) et ledit premier siège latéral (11) soit permis.

3. Étrier de frein (100) apte à être utilisé avec un disque de frein (200), le disque de frein (200) ayant un axe de rotation (L1), et des première et deuxième surfaces d'extrémité (210, 220) opposées perpendiculaires à l'axe de rotation (L1), ledit étrier de frein (100) comprenant :
une unité de corps principal (10, 10') incluant des premier et deuxième sièges latéraux (11, 12) qui sont aptes à être respectivement situés de deux côtés du disque de frein (200) et de manière respectivement adjacente aux première et deuxième surfaces d'extrémité (210, 220), lesdits premier et deuxième sièges latéraux (11, 12) étant interconnectés et définissant conjointement entre eux un espace de fonctionnement (13) qui est apte à recevoir en partie le disque de frein (200) ;
une unité de garnissage (20) incluant un premier organe de positionnement (21) qui est disposé dans ledit espace de positionnement (13), qui est mobile dans la direction de l'axe de rotation (L1), et qui est disposé entre ledit premier siège latéral (11) et la première surface d'extrémité (210) du disque de frein (200), un premier garnissage (22) qui est monté de manière fixe sur ledit premier organe de positionnement (21) et qui est disposé entre ledit premier organe de positionnement (21) et la première surface d'extrémité (210) du disque de frein (200), un deuxième organe de positionnement (23) qui est disposé dans ledit espace de fonctionnement (13), qui est mobile dans la direction de l'axe de rotation (L1), et qui est disposé entre ledit deuxième siège latéral (12) et la deuxième surface d'extrémité (220) du disque de frein (200), et un deuxième garnissage (24) qui est monté de manière fixe sur ledit deuxième organe de positionnement (23) et qui est disposé entre ledit deuxième organe de positionnement (23) et la deuxième surface d'extrémité (220) du disque de frein (200) ;
une unité de freinage (30, 30') incluant un premier ensemble de bras de poussée (31, 31') qui est monté sur ledit premier siège latéral (11), qui est mobile dans la direction de l'axe de rotation (L1), et qui est situé d'un côté dudit premier organe de positionnement (21) à l'opposé dudit premier garnissage (22), un deuxième ensemble de bras de poussée (32) qui est monté de manière mobile sur ledit deuxième siège latéral (12), qui est mobile dans la direction de l'axe de rotation (L1), et qui est situé d'un côté dudit deuxième organe de positionnement (23) à l'opposé dudit deuxième garnissage (24), une pluralité d'organes en tige (33) espacés qui sont montés sur ledit premier ensemble de bras de poussée (31, 31') et ledit deuxième ensemble de bras de poussée (32) et qui s'étendent dans la direction de l'axe de rotation (L1), et une pluralité d'organes souples (34) pour pousser de manière souple ledit premier ensemble de bras de poussée (31, 31') et ledit deuxième ensemble de bras de poussée (32) en éloignement l'un de l'autre, chacun desdits organes en tige (33) présentant une partie d'extrémité de butée (331) pour se mettre en butée contre ledit deuxième ensemble de bras de poussée (32), et une partie d'extrémité de fixation (332) opposée à ladite partie d'extrémité de butée (331) dans la direction de l'axe de rotation (L1) ; et
une unité d'actionnement (40) incluant un actionneur (42) qui est monté sur lesdites parties d'extrémité de fixation (332) desdits organes en tige (33), et un organe en essieu (44) qui s'étend le long d'un axe central (L2) parallèle à l'axe de rotation (L1) et qui est entraîné par ledit actionneur (42) pour déplacer au moins une partie dudit premier ensemble de bras de poussée (31, 31') le long de l'axe central (L2) par rapport audit premier siège latéral (11), de manière à régler une distance entre ledit premier ensemble de bras de poussée (31, 31') et ledit deuxième ensemble de bras de poussée (32) afin de déplacer ladite unité de garnissage (20) ;
sachant que ledit premier ensemble de bras de poussée (31, 31') inclut un module d'auto-alignement (60, 60') qui inclut au moins une articulation d'auto-alignement, de telle sorte qu'un désalignement entre ledit premier siège latéral (11) et une partie dudit premier ensemble de bras de poussée (31, 31') sans interférence entre ledit premier ensemble de bras de poussée (31, 31') et ledit premier siège latéral (11) soit permis ;
ledit étrier de frein (100) étant **caractérisé en ce que** ledit premier siège latéral (11) présente un trou traversant d'essieu (112') non circulaire qui s'étend le long de l'axe central (L2), et une pluralité de premiers trous traversants de guidage (113) qui s'étendent pour être parallèles à l'axe central (L2), ledit premier ensemble de bras de poussée (31') incluant en outre un premier corps principal (311'), une partie en tube d'extension (312') qui s'étend depuis ledit premier corps principal (311') et à travers ledit trou traversant d'essieu (112') dudit premier siège latéral (11), un trou fileté (313') qui est formé dans ladite partie en tube d'extension (312'), une pluralité de premières parties en tube de guidage (314') qui s'étendent depuis ledit premier corps principal (311') et qui s'étendent respectivement à travers lesdits premiers trous traversants de guidage (113') dudit premier siège latéral (11), et une pluralité de premiers trous traversants (315') qui sont respectivement formés à travers lesdites premières parties en tube de guidage (314'), ladite partie en tube d'extension (312') ayant une section transversale non circulaire, et mettant en prise de manière ajustée et coulissante ledit trou traversant d'essieu (112') de telle sorte que ladite partie en tube d'extension (312') soit permise de se déplacer par rapport audit premier siège latéral (11) le long de l'axe central (L2) et soit empêchée de tourner par rapport audit premier siège latéral (11), ledit module d'auto-alignement (60') dudit premier ensemble de bras de poussée (31') incluant une articulation d'auto-alignement qui inclut un pivot à rotule (61') qui est disposé sur l'un dudit premier corps principal (311') et de ladite partie en tube d'extension (312'), et une prise (62') qui est disposée sur l'autre dudit premier corps principal (311') et de ladite partie en tube d'extension (312') et qui est mise en prise de manière coulissante avec ledit pivot à rotule (61'), de telle sorte qu'un désalignement entre ledit premier corps principal (311') et ladite partie en tube d'extension (312') soit permis, et qu'un désalignement entre ledit premier corps principal (311') dudit premier ensemble de bras de poussée (31') et ledit trou traversant d'essieu (112') dudit premier siège latéral (11) sans interférence entre ladite partie en tube d'extension (312') et ledit premier siège latéral (11) soit permis.

4. L'étrier de frein (100) tel que revendiqué dans la revendication 3, **caractérisé en outre en ce que** ledit pivot à rotule (61') est disposé sur ledit premier corps principal (311'), et ladite prise (62') est disposée sur ladite partie en tube d'extension (312').

5. L'étrier de frein (100) tel que revendiqué dans la revendication 4, **caractérisé en outre par** une pluralité de douilles autolubrifiantes (70) qui sont respectivement montées sur lesdits premiers trous traversants de guidage (113) dudit premier siège latéral (11) et qui permettent auxdites premières parties en tube d'extension (314') de s'étendre respectivement et de manière coulissante à travers elles.
